# FASCICULE DE BREVET EUROPEEN

(11) **EP 1 114 740 B1**
(45) Date de publication et mention de la délivrance du brevet: **21.08.2002**
(21) Numéro de dépôt: 99923603.7
(22) Date de dépôt: 26.05.1999
(51) Int. Cl.: B44B 5/00

(54) **MACHINE A ESTAMPER DES MARQUES DOTEE DE MOTEURS FIXES**
MARKIERUNGSVORRICHTUNG MIT FIXIERTEN MOTOREN
MARKING MACHINE WITH FIXED MOTORS

(30) Priorité: 28.05.1998 ES 9801114
(43) Date de publication de la demande: 11.07.2001
(73) Titulaire: Proyectos y Fabricacion Electronica, S.A., 20010 San Sebastian (ES)
(72) Inventeur: AZPIROZ VILLAR, Francisco, E-20010 San Sebastian (ES)
(74) Mandataire: Urizar Barandiaran, Miguel Angel
(86) Numéro de dépôt international: ES9900155
(87) Numéro de publication internationale: WO99061259

(56) Documents cités:
- EP-A- 0 519 850
- EP-A- 0 591 092
- DE-A- 3 437 171
- US-A- 4 596 509
- US-A- 5 368 400

## Description

Sur les appareils de marquage connus jusqu'à présent, il faut déplacer un poinçon sur deux axes OX et OY, en faisant la forme du caractère ou logo que l'on veut imprimer, en produisant un marquage par déformation.

Le poinçon doit pouvoir bouger dans un plan XY. Pour pouvoir le déplacer, deux moteurs sont utilisés, l'un le déplaçant suivant l'axe OX et l'autre suivant l'axe OY.

Dans certains systèmes actuels, l'un des moteurs se déplace, à son tour, avec le curseur, suivant l'un des axes, c'est-à-dire qu'un moteur est fixe et l'autre mobile, ce qui implique qu'il y a un moteur qui doit faire un effort supérieur, car il doit supporter la masse de l'autre.

De ce fait, sur les marqueuses connues qui disposent de deux glissières, on installe un moteur fixe qui transmet le mouvement, grâce à une courroie ou à une vis sans fin, à une pièce qui glisse sur l'une des glissières de l'un des axes, par exemple l'axe OX, la fixation du moteur de l'axe OY se trouvant sur cette pièce, ainsi que la deuxième glissière et, sur celle-ci, le poinçon.

Dans d'autres systèmes actuels, tels que décrits par exemple dans le brevet EP-A-0 591 092 une marqueuse à moteurs fixes, dispose pour l'axe OX, d'un premier moteur électrique et fixe, de moyens de transmission pour transmettre son mouvement à une première poupée, qui glisse sur une première glissière, cette première poupée étant solidaire avec une seconde glissière et pour l'axe OY, d'un second moteur électrique et fixe, de moyens de transmission pour transmettre son mouvement à une poupée de travail qui glisse sur cette seconde glissière.

Les moyens de transmission pour l'axe OX et pour l'axe OY sont fixes dans l'espace.

On peut observer qu'il y a une troisième glissière avec la fonction de permettre le déplacement de la poupée de travail sur l'axe OX.

L'objet de l'invention permet d'obtenir, de manière améliorée, au moyen de deux moteurs et deux glissières, le déplacement d'un curseur ou poinçon suivant un plan XY, sans que le déplacement d'aucun des moteurs ne soit nécessaire pour le déplacement de la poupée, autrement dit, aucun des moteurs n'a à se déplacer suivant un axe avec la glissière et le poinçon.

Pour mieux comprendre l'objet de la présente invention, une forme préférentielle de réalisation pratique a été représentée dans le dessin, susceptible de changements accessoires ne dénaturant pas son fondement.

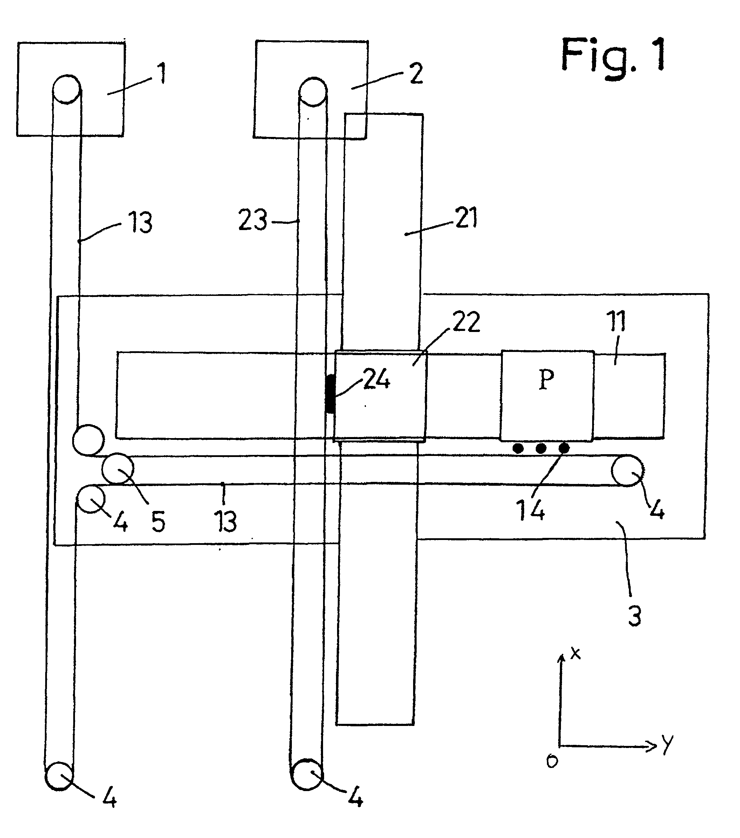

La figure 1 est une vue schématique en plan d'une réalisation pratique de l'objet de l'invention.

On décrit ci-dessous un exemple de réalisation pratique, non limitative, de la présente invention.

A un premier niveau, on installe un premier moteur électrique (2) fixe, par exemple, pas à pas, pour le mouvement voulu suivant l'axe OX.

On installe une glissière (21) pour l'axe OX où glisse une poupée (22) qui reçoit le mouvement du moteur (2) à travers les moyens de transmission correspondants, par exemple une courroie (23) avec une zone (24) fixée à la poupée (22).

A un deuxième niveau et étant solidaire avec la poupée (22), on installe un support (3).

A un troisième niveau, on installe, de manière fixe, un deuxième moteur (1) qui, normalement, sera de même nature que le premier moteur (2) et qui, au moyen d'une courroie (13), transmettra son mouvement à une poupée de travail (P) installée suivant l'axe OY, la poupée de travail (P) étant la porteuse du curseur/poinçon.

On dispose une zone (14) d'union entre la poupée de travail (P) et la courroie (13) de transmission.

Une seconde glissière (11) est solidaire du support (3).

Pour tous les mouvements, on utilise les poulies (4) correspondantes.

Grâce à cette disposition, on atteint le but poursuivi qui est d'obtenir le déplacement du curseur/poinçon dans un plan XY, sans que les moteurs (1), (2) à l'origine de ce déplacement, soient impliqués dans ce déplacement, autrement dit, le curseur/poinçon se déplace, mais pas les moteurs (1), (2).

Les contrôles ou la commande des moteurs (1), (2) sont supposés conventionnels et sans nouveauté.

On observe que l'action du premier moteur (2) selon l'axe OX produit un déplacement suivant l'axe OX de l'ensemble et, étant donné que la poupée (22), le support (3) et la deuxième glissière (11) sont solidaires, ils entraînent avec eux la poupée de travail (P), ce qui provoque, par la courroie (13), un déplacement suivant l'axe OY de cette poupée de travail (P), indépendamment de l'action du second moteur (1), autrement dit, l'action du premier moteur (2) est à l'origine de déplacements de la poupée de travail (P) suivant les deux axes OX, OY et l'action du second moteur (1) ne donne lieu qu'à des déplacements suivant l'axe OY.

Pour que la poupée de travail (P) ne se déplace que suivant l'axe OX, il faudra que le second moteur (1) donne lieu à un déplacement de la poupée de travail (P) suivant l'axe OY de même valeur et de sens contraire à celui induit par le premier moteur (2).

Le déplacement suivant l'axe OY sera obtenu avec un mouvement /action différentielle entre les deux moteurs (1), (2) et les transmissions correspondantes.

Dans la situation la plus simple et conformément à la disposition de la figure 1, nous devrions faire, par rapport à la poupée de travail (P), si nous voulons qu'elle se déplace suivant l'axe OX, que les deux moteurs (1), (2) agissent simultanément en effectuant le même parcours et dans le même sens. Si nous voulons qu'elle avance suivant l'axe OY, le moteur (1) (axe OY) devra avoir un plus grand déplacement que le moteur (2) (axe OX), de sorte que la différence entre les deux soit le déplacement du poinçon suivant l'axe OY. Si nous voulons qu'elle recule, le déplacement suivant l'axe OY devra être inférieur à celui suivant l'axe OX. Logiquement, si les déplacements sont plus grands que les écarts de mouvements des axes, le moteur (1) (axe OY) devra changer son sens de rotation.

Le calcul des quantités de déplacement change, comme cela est logique, si les moteurs (1), (2) ne sont pas identiques et que les transmissions à multiplications / démultiplications directes/inverses varient également. Par exemple,on peut penser à un inverseur (5) du sens de déplacement, ce qui fait que la première partie de la courroie ne serait pas directement raccordée à la seconde partie de la courroie, mais au moyen de l'inverseur (5).

Il est bien compris que les moyens de transmission peuvent être n'importe lesquels: courroies de différentes formes, broches, engrenages, bandes, etc.

## Revendications

1. Marqueuse à moteurs fixes, qui dispose pour l'axe (OX), d'un premier moteur (2) électrique et fixe, de moyens (23) de transmission pour transmettre son mouvement à une première poupée (22), qui glisse sur une première glissière (21), cette première poupée (22) étant solidaire avec une seconde glissière (11) et pour l'axe (OY), d'un second moteur électrique (1) et fixe, de moyens (4), (5), (13), (14) de transmission pour transmettre son mouvement à une poupée de travail (P) qui glisse sur cette seconde glissière (11) se caracterisant en ce qu'elle dispose: d' un support (3) solidaire avec la première poupée et avec la seconde glissière (11), en disposant sur le support (3) les moyens de transmission (4), (5), (13), (14) pour transmettre le mouvement selon l'axe (OY) de façon à ce que le mouvement du support (3) sur l'axe (OX) entraîne que ces moyens (4), (5), (13), (14) de transmission pour l'axe (OY) produisent sur la poupée de travail (P) un mouvement sur l'axe (OY), et le premier et le second moteurs (1), (2) étant commandés de façon à ce qu'un mouvement différentiel soit créé entre eux pour effectuer, dans la quantité nécessaire, le déplacement sur l'axe (OY).

2. Marqueuse à moteurs fixes, selon la revendication précédente, se caractérisant par le fait que les moyens de transmission (13, 23) sont des courroies et/ou des broches.

## Claims

1. Marker with fixed motors which, for axis (OX), has a first electrical fixed motor (2), with transmission means (23) to transmit its movement to a first head piece (22), which slides on a first guide (21), this first head piece (22) being solid with a second guide (11) and, for the (OY) axis it has a second electrical fixed motor (1) with transmission means (4), (5), (13), (14) to transmit its movement to a working head piece (P) which slides on this second guide (11), being characterised because it has a support (3) solid with the first head piece and with the second guide (11), with transmission means (4), (5), (13), (14) arranged on support (3) to transmit the movement according to axis (OY) so that the movement of support (3) on axis (OX) makes these transmission means (4), (5), (13), (14) for axis (OY) produce a movement on axis (OY), on the working head piece (P), the first and second motors (1), (2) being activated so that a differential movement is created between them to carry out, in the required quantity, the movement on the axis (OY).

2. Marker with fixed motors, according to the previous claim, which is **characterised by** the fact that the transmission means (13, 23) are belts and/or spindles.

## Patentansprüche

1. Markiervorrichtung mit feststehenden Motoren, welche über einen ersten elektrischen und feststehenden Motor (2) für die Achse (OX) und Übertragungselemente (23) für die Übertragung der Bewegung des Motors auf ein erstes, auf einer ersten Führung (21) gleitendes Kopfstück (22) verfügt, wobei dieses erste Kopfstück (22) fest mit einer zweiten Führung (11) verbunden ist, und für die Achse (OY) über einen zweiten und ebenfalls feststehenden elektrischen Motor (1) und die Übertragungselemente (4), (5), (13) und (14) für die Übertragung der Motorbewegungen auf einen auf dieser zweiten Führung (11) gleitenden Arbeitskopf (P) verfügt, wobei diese Führung **dadurch gekennzeichnet ist, dass** sie mit einer mit dem ersten Kopfstück und der zweiten Führung (11) fest verbundenen Halterung (3) versehen ist, und auf dieser Halterung (3) die Übertragungselemente (4), (5), (13) und (14) angebracht sind, welche die Übertragung der Bewegungen der Achse (OY) so übertragen, dass die Bewegung der Halterung (3) auf der Achse (OX) zur Folge haben, dass die Übertragungselemente (4), (5), (13) und (14) für die Achse (OY) in dem Arbeitskopf (P) eine Bewegung auf der Achse (OY) hervorrufen, wobei der erste und der zweite Motor (1) (2) so angetrieben werden, dass zwischen diesen eine Differentialbewegung entsteht, aufgrund welcher eine Verlagerung auf der Achse (OY) um die benötigte Wegstrecke hervorgerufen wird.

2. Markiervorrichtung mit feststehenden Motoren nach dem obigen Anspruch aber **dadurch gekennzeichnet, dass** die Übertragungsvorrichtungen (13, 23) Riemen und/oder Spindeln sind.
